(19)

**Europäisches Patentamt**

**European Patent Office**

**Office européen des brevets**

(11) **EP 4 654 549 A1**

(12) **EUROPEAN PATENT APPLICATION**

(43) Date of publication:
**26.11.2025  Bulletin 2025/48**

(21) Application number: **25168629.1**

(22) Date of filing: **04.04.2025**

(51) International Patent Classification (IPC):
**H04L 45/24** *(2022.01)*      **H04L 47/27** *(2022.01)*
**H04L 47/62** *(2022.01)*      *H04L 47/10* *(2022.01)*

(52) Cooperative Patent Classification (CPC):
**H04L 47/623; H04L 45/24; H04L 47/27;** H04L 47/39

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **20.05.2024  US 202418668726**

(71) Applicant: **Google LLC**
**Mountain View, CA 94043 (US)**

(72) Inventors:
  • **Kumar, Praveen**
    **Mountain View, California, 94043 (US)**
  • **Vaduvatha, Srinivas**
    **San Jose, California, 795117 (US)**
  • **Agarwal, Abhishek**
    **Mountain View, California, 94043 (US)**
  • **Wassel, Hassan Mohamed Gamal Hassan**
    **Mountain View, California, 94043 (US)**
  • **Singhvi, Arjun**
    **Mountain View, California, 94043 (US)**
  • **Ghalayini, Ahmad**
    **Mountain View, California, 94043 (US)**
  • **Dukkipati, Nandita**
    **Mountain View, California, 94043 (US)**
  • **Chandra, Prashant**
    **Mountain View, California, 94043 (US)**

(74) Representative: **Betten & Resch**
**Patent- und Rechtsanwälte PartGmbB**
**Maximiliansplatz 14**
**80333 München (DE)**

(54) **MULTIPATHING FOR HARDWARE NETWORK TRANSPORT**

(57)    Aspects of the disclosure are directed to establishing and utilizing multiple flows, e.g., data paths, within a single connection between two end points in a network. Packets being transmitted between the endpoints can be load-balanced among multiple flows using a set of flow labels. The flow label is determined using scheduling logic. The flow labels include a flow weight that encodes how the packet is mapped to a given flow. The flow weight may be used to determine a congestion window for each flow in the connection. As packets are communicated between the endpoints, congestion control data and acknowledgement coalescing entries are updated before an acknowledgement is sent. Each flow maintains a counter of the number of acknowledgments received. The number of acknowledgments received is used to implement congestion control.

FIG. 2

EP 4 654 549 A1

**Description**

BACKGROUND

Data connections across a network communicate data packets from various different source devices to different destination devices. Communication over a network can be broken down into a network model of stacked layers, where each layer contributes to some aspect of the transmission of data to and to and from different devices of the network. A transport layer, for example, handles communication of data across the network. The transport layer can be implemented in hardware to enable or improve features for communicating data more efficiently. Data may be received from layers higher in the network, implementing protocols referred to as upper-layer protocols (ULPs).

A connection between the devices, e.g., endpoints of the network, typically has a single data path. If there is a delay in transmission, receipt, and/or acknowledgements, the communication between the end points is delayed, if not stopped altogether, as there are no other data paths for the packets to travel.

BRIEF SUMMARY

Aspects of the disclosure are directed to establishing and utilizing multiple flows, *e.g.*, data paths, within a single connection between two end points in a network. Packets being transmitted between the endpoints can be load-balanced among multiple flows using, for example, a set of flow labels. The flow label is determined by an end point implementing scheduling logic. The flow labels include a flow weight that encodes how the packet is mapped to a given flow. The flow weight may be used to determine a congestion window for each flow in the connection. As packets are communicated between the endpoints, congestion control data and acknowledgement coalescing entries are updated before an acknowledgement is sent. Each flow maintains a counter of the number of ACKs received. The number of ACKs received is used to implement congestion control.

One aspect of the technology is directed to a method, comprising determining, using connection scheduling logic and based on a flow index selected using the connection scheduling logic of a transmitter, a flow label for the packet, wherein the flow label indicates a given flow of a plurality of flows within a single connection between the transmitter and a receiver, updating, by the receiver, congestion control metadata for a received packet, wherein the congestion control metadata is used to determine a rate at which packets can be sent on each flow of the plurality of flows, generating, by the receiver, an acknowledgement based on the flow label associated with the received packet, wherein the acknowledgement comprises the updated congestion control metadata, and transmitting, by the receiver, the acknowledgement to the transmitter.

The connection scheduling logic may be a weighted round robin. The weighted round robin may be configured to maintain a number of available credits for each flow index, advance to a next flow index for each subsequent packet, and reload the number of available credits when the number of available credits reaches zero.

The method may further comprise storing, by the receiver, the flow index in a transmitter context of the packet.

When updating the congestion control metadata, the method may further comprise identifying, based on the flow label of the received packet, the flow index associated with the congestion control metadata, and updating the congestion control metadata at the flow index.

The method may further comprise determining, based on the flow label associated with the packet, a weight for each flow label and a congestion window for a given flow of the plurality of flows.

The flow label may be associated with a weight corresponding to a level of congestion for the flow.

The flow label corresponds to the flow index.

The congestion control metadata may include at least one of timestamps, CSIG data, hop count, or cumulative ECN count.

Another aspect of the technology is directed to a system for transmitting packets via a plurality of flows within a connection. The system may comprise the connection between a transmitter and a receiver, the connection comprising the plurality of flows for packets to traverse between the transmitter and the receiver, the transmitter configured to transmit a packet and a flow label associated with the packet to the receiver. The receiver configured to receive the packet via a given flow, update congestion control metadata, wherein the congestion control metadata is used to determine a rate at which packets can be sent on each flow of the plurality of flows, and generate an acknowledgement based on the flow label associated with the packet, wherein the acknowledgement comprises the updated congestion control metadata, and transmit the acknowledgement to the transmitter.

Yet another aspect of one or more non-transitory computer-readable storage media storing instructions that when executed by a network device comprising one or more processors, cause the one or more processors to perform operations comprising selecting, using connection scheduling logic of a transmitter, a flow index for a packet, determining, using connection scheduling logic and based on a flow index selected using the connection scheduling logic of a transmitter, a flow label for the packet, wherein the flow label indicates a given flow of a plurality of flows within a single connection between the transmitter and a receiver, updating, by the receiver, congestion control metadata, wherein the congestion control metadata is used to determine a rate at which packets can be sent on each data path of the plurality of data paths, generating, by the receiver, an acknowledgement based on the flow label associated with the received packet, wherein the acknowledgement comprises the updated congestion control metadata, and transmitting, by the receiver, the acknowledgement to the transmitter.

BRIEF DESCRIPTION OF THE DRAWINGS

Figure 1 is a block diagram of an example communication protocol system, according to aspects of the disclosure.

Figure 2 is a block diagram of an example architecture for implementing multipathing in a single connection, according to aspects of the disclosure.

Figure 3 is an example of how a flow label is selected using scheduling logic, according to aspects of the disclosure.

Figure 4 is an example of how the congestion control reflection metadata and ACK coalescing entries are updated, according to aspects of the disclosure.

Figure 5 is a flow diagram for an example process when an upper layer protocol acknowledgement arrives after the ACK coalescing state for the corresponding flow has been evicted, according to aspects of the disclosure.

Figure 6 is a flow diagram of an example process for allowing a single connection to transmit and receive packets using multiple flows, according to aspects of the disclosure.

Figure 7 is a block diagram of an example network implementing an example NIC, according to aspects of the disclosure.

Figure 8 is a block diagram of an example computing environment for implementing resource isolation, according to aspects of the disclosure.

DETAILED DESCRIPTION

Overview

The technology is generally directed to load-balancing packets among multiple flows in a single connection between different entities. Typically, a connection between two entities uses a single path and a single flow label to send packets from one entity to another. For a single connection between two entities, such as two network endpoints, to load balance packets on multiple data paths in the single connection, a set of flow labels is used, rather than a single flow label. Scheduling packets across flows can be open- or closed-loop. For open-loop, the set of flow labels includes a flow weight that encodes how to map packets across the multiple paths in the single connection. The weights for each flow are based on the congestion measured for that flow. For closed-loop scheduling, each flow maintains a separate congestion window.

The flow label is determined using connection scheduling logic, such as a weighted round robin scheduler. The flow label includes a flow weight, which can be used to determine the congestion window for each flow in the connection. The flow weights for the flow labels may, in some examples, be the same and/or different. As the packets are transmitted and received between the two entities, congestion control data and acknowledgements (ACKs) coalescing entries are updated before ACKs are sent. A flow maintains a counter of the number of packets acknowledged for each flow such that congestion control can be implemented by determining the congestion window, and weight, of each data flow. The congestion control may be enforced as a weighted round robin according to the different congestion control windows between flows. In some examples, the congestion control may be enforced based on a congestion control window per flow.

As used herein, a connection establishes communication between two endpoints in the network. The technology disclosed above and herein allows for a single connection to include a plurality of flows, whereas previously a single connection included a single flow. A flow represents a single path, *e.g.,* a data path, in the network where packets are transmitted and received, e.g., flow. A transport protocol maintains a congestion control state for each flow. A flow label is used by the switch to hash. While the term 'flow label' is used throughout the disclosure, for protocols that do not support flow labels natively, the technology can be implemented through other header fields, rather than the native flow labels.

Previously, maintaining multiple congestion control states was challenging without having a way to track the state of the flow, e.g., via flow labels. Moreover, loss recovery was challenging if the same packet sequence number (PSN) is shared between multiple flows. Aspects of the disclosure provide for at least the following technical advantages. As switches hash on packet header fields, including the flow label, varying the flow label for packets belonging to the same connection efficiently load balances packets in the connection over multiple paths. By using multiple paths in the same connection, the connection, or an operation, is able to use high bandwidth in the network and, therefore, achieve lower latency. This is possible by maintaining multiple congestion control states based on the flow labels.

Example Systems

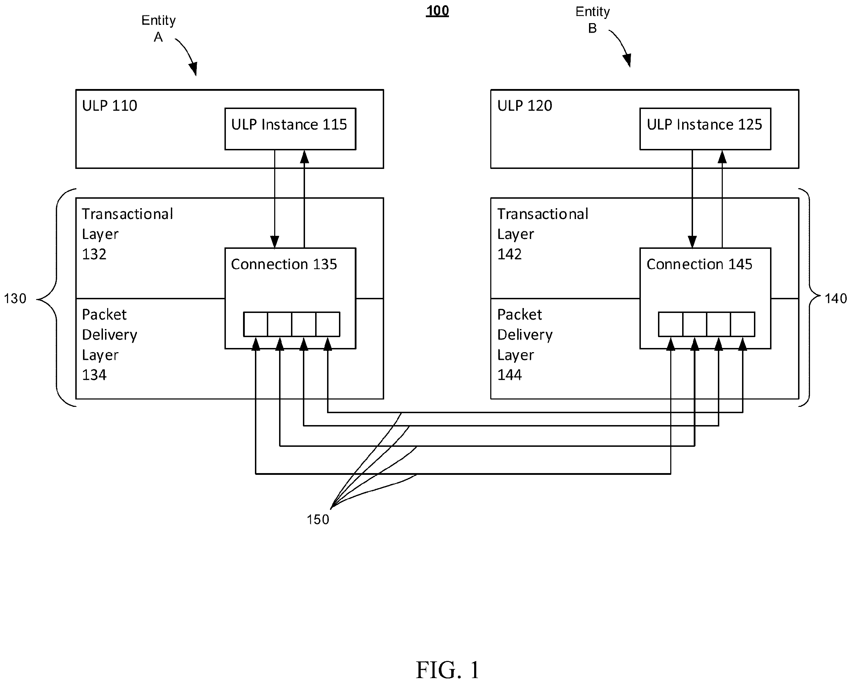

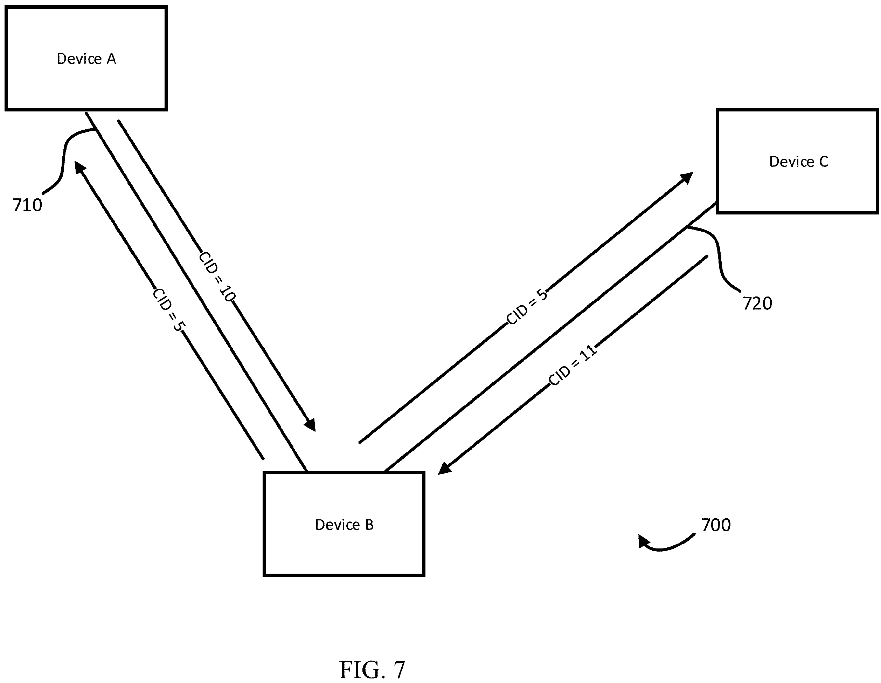

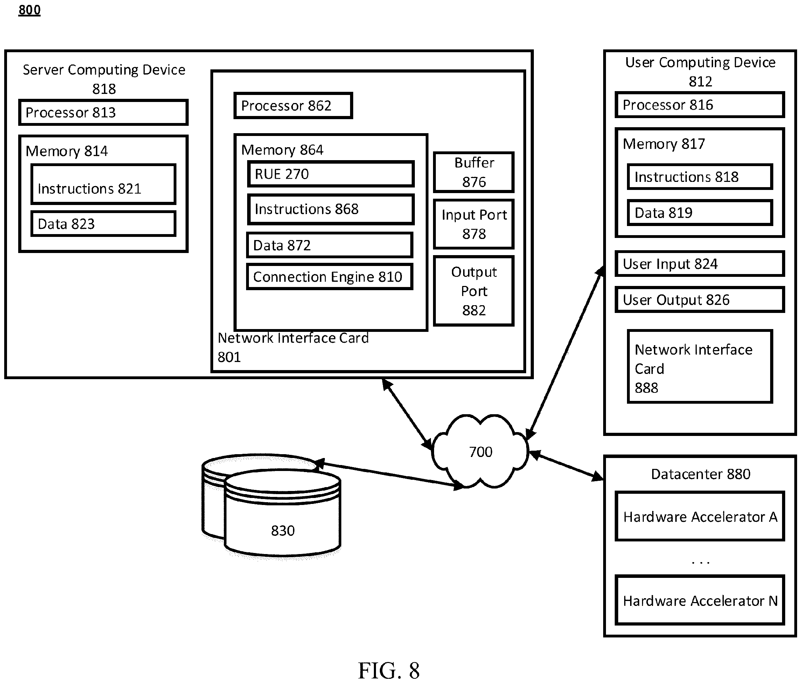

Figure 1 is a block diagram of an example communication protocol system 100. The communication protocol system 100 may be implemented on two or more entities in a network, such as two or more of devices A, B, C of network 700 of Figure 7, for example by processors 862, 816 of Figure 8. As shown, each entity may include multiple layers of communication protocols. For example, entity A may include upper layer protocol ("ULP") 110 and reliable transport ("RT") protocol 130, and entity B may include ULP 120 and RT protocol layer 140. Peers may be formed between protocols of each layer. Thus, ULP 110 and ULP 120 are ULP peers, and RT protocol layer 130 and RT protocol layer 140 are RT peers. Further as shown, within each entity, the ULPs 110, 120 are configured to communicate with the RT protocol layers 130, 140, respectively. The ULPs 110, 120 may include a respective ULP instance 114, 125. The ULP instances 115, 125 may be configured to communicate with connection endpoint 135, 145, respectively. Connections 135, 145 may be configured to establish a connection between the RT layers 130, 140. The connection established between connection 135, 145 may include a plurality of flows 150.

In one example, the ULPs 110, 120 may be responsible for implementing a hardware/software interface, the processing of messages, completion notifications, and/or end-to-end flow control. The ULPs 110, 120 may be implemented on a number of hardware or software devices. For example, the ULPs may include implementations of Remote Direct Memory Access ("RDMA"). As another example, the ULPs may include implementations of Non-Volatile Memory Express ("NVMe").

In one example, the RT protocols 130, 140 may be responsible for reliable delivery of packets, congestion control, admission control, and/or ordered or unordered delivery of packets. Each RT protocols 130, 140 may logically be partitioned into two sublayers of protocols. Thus, as shown, RT protocol layer 130 is partitioned into a transactional sublayer 132 that is responsible for end-point admission control and optionally ordered delivery of packets, and a packet delivery sublayer 134 that is responsible for end-to-end reliable delivery and congestion control. Likewise, RT protocol layer 140 is also divided into a transactional sublayer 142 and a packet delivery layer sublayer 144.

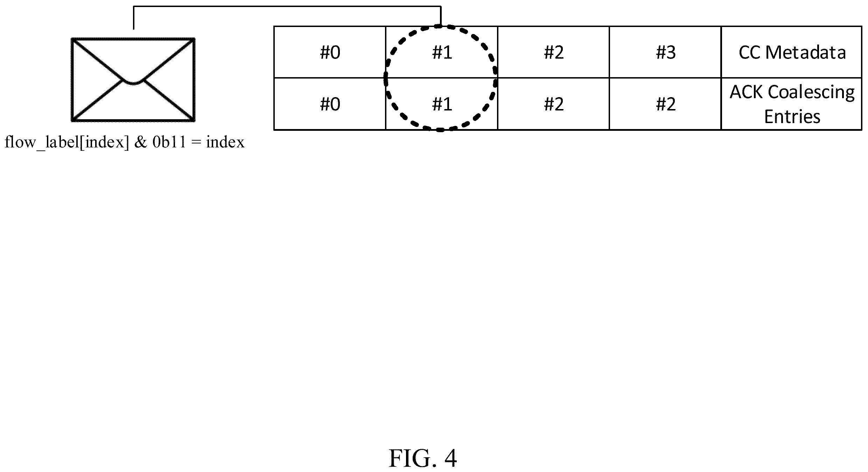

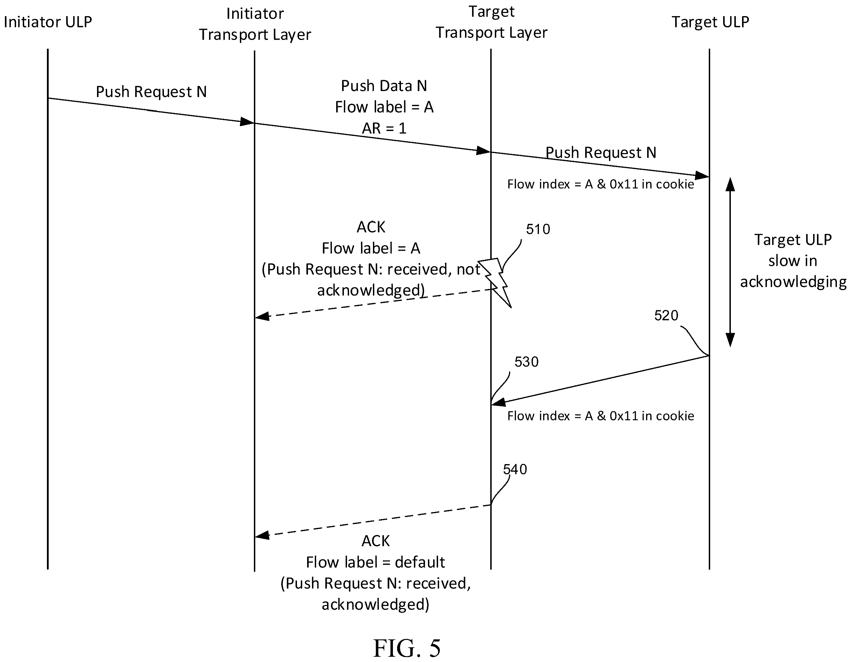

The entities A, B may be two endpoints within a network, such as the network shown in Figures 4 and 5. A connection may be established between the two endpoints to establish communications between the endpoints. The technology disclosed above and herein allows for a single connection to include a plurality of flows. Previously, a single connection included a single flow. The RTs 130, 140 maintain a congestion control state per flow. To load balance the packets being transmitted over the multiple flows of the single connection, a set of flow labels may be used, instead of a single flow label. For example, as switches hash on packet header fields, including the flow label, varying the flow label for packets belonging to the same connection allows for the packets to be load balanced over multiple flows. One entity, *e.g.*, entity A, may be an initiator entity, such as a transmitter, while another entity, e.g., entity B, may be a target entity or a receiver.

The connection has a congestion window that can be set dynamically by a rate update engine (RUE).

For example, the RUE may include a congestion control engine, which may be configured with any of a number of algorithms, such as SWIFT, BBR, etc. In this regard, the congestion control algorithm may be implemented in a combination of software, firmware, or hardware. For example, the congestion control algorithm may be implemented in host software, in a network interface card's ("NIC") firmware, or in a hardware-implemented rate update engine.

According to some examples, the congestion window may be enforced in a plurality of ways. For example, a weighted round robin may be used based on the different congestion windows between each flow of the connection. The weighted round robin uses a flow weight that will determine how many packets will be assigned to a flow. As an example, if there are 1,000 packets, five (5) flows, and each flow has a weight of 200, an equal number of packets will be sent on each flow. If one of the five flows is slow, e.g., ACKs were not received for at least some of the packets on the flow, the same number of packets, *e.g.,* 200 packets, will continue to be sent on that flow. Another method of enforcement includes enforcing the congestion window on a per flow basis. For example, if the congestion window for each flow is 200 packets, as in the previous example, and one flow is slow, e.g., ACKs were not received for at least some of the packets on a given flow, when a second batch of packets arrives. At least some of the packets will be diverted from the slow flow. As one example, all the packets intended for the slow flow may be diverted to the other flows in the connection. As another example, if 100 ACKs were received for the 200 packets, 100 packets from the second batch of packets will be sent on the slow flow and the other 100 packets will be diverted to the other flows.

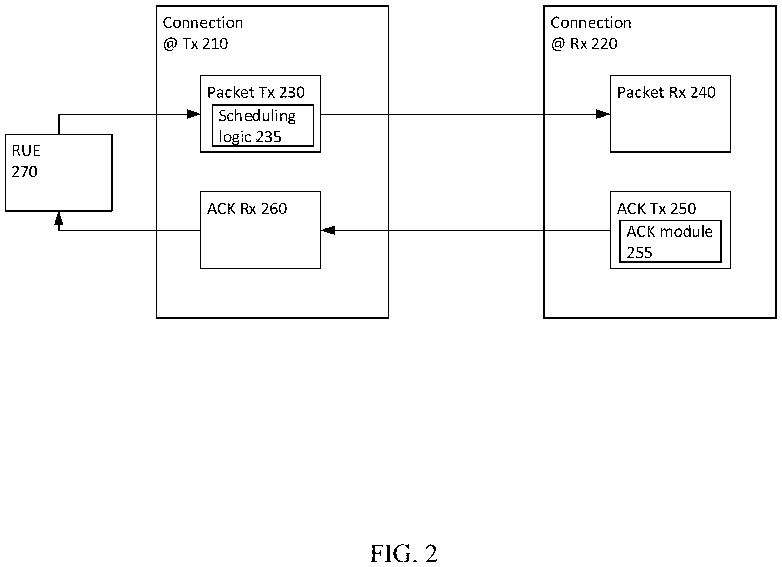

Figure 2 is an example architecture for implementing multipathing in a single connection. The architecture includes two connection endpoints, a TX connection endpoint 210 and an RX connection endpoint 220. When a packet is ready to be transmitted by the TX connection endpoint 210 connection scheduling logic 225 may be used to select a flow index.

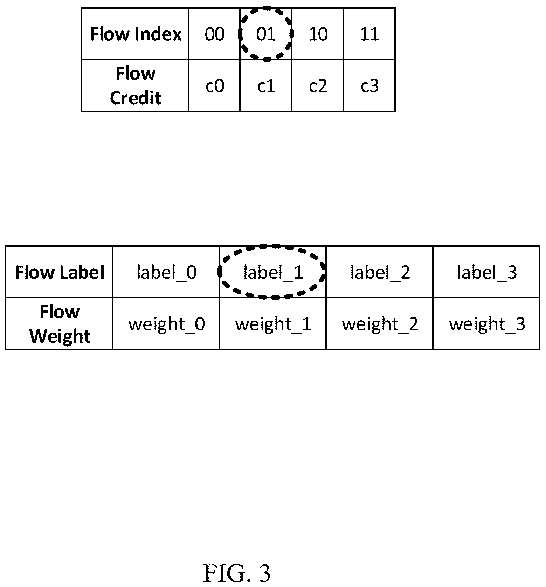

Figure 3 illustrates example connection scheduling logic. The connection scheduling logic 235 may be a weighted round robin (WRR) scheduler. The connection scheduling logic is used across flows to select a flow index. The flow corresponds to the congestion control state maintained in the processor core used for congestion control in transport protocols and RUE for each data path per connection.

The WRR scheduler maintains a number of available credits, e.g., flow credits, for each flow index. For each packet, the WRR scheduler advances to the next flow index, e.g., wraps around, with non-zero credits and selects the corresponding flow index. As shown in Figure 3, the WRR advanced to flow credit "c1," corresponding to flow index "01." The WRR scheduler may, in some examples, decrease the credits for the selected flow index. The flow then selects the flow label corresponding to the flow index selected by the WRR scheduler for the packet. The corresponding flow index may be identified based on the flow credit, *e.g.,* "c1", and the corresponding flow weight. For example, the credit number "1" of "c1" may correspond to the weight "1" of "weight_1." The flow label associated with "weight_1" is "label_1."

When the credits for the flow indices in the WRR schedule reach zero, the WRR scheduler may reset the credits for each flow index to be the weight of the flow index as specified by RUE 270. According to some examples, RUE 270 may update the flow weights at any time through RUE responses. The RUE 270 may, in some examples, update the flow labels through a RUE response. In some examples, the flow may use the updated flow labels when determining the flow label based on the WRR scheduler-selected flow index.

Returning to Figure 2, in block 230, the packet, along with its flow label, is transmitted to the RX connection endpoint 220. In block 240, the RX connection endpoint, upon receipt of the packet, updates the congestion control reflection metadata.

Figure 4 illustrates an example of updating the congestion control reflection metadata and ACK coalescing entries. The RX connection endpoint 220 may update the congestion control reflection metadata on a per flow basis. The congestion control reflection metadata includes, for example, write packet timestamps, ECN count, hop counter, etc. The RX connection endpoint 220 also updates the coalescing timer/counter for the ACK coalescing entry for the index associated with the flow label of the packet. The coalescing timer/counter may be updated on a per flow basis. By coalescing the ACKs, fewer ACK packets will present on the network traffic, which may reduce the likelihood of congestion. The ACK coalescing entry may, in some examples, store the flow label of the received packet. Storing the flow label of the received packet allows for the generated ACK packet to include the flow label of the most recently received packet on the data path.

As shown in Figure 4, the flow maintains a list of congestion control reflection metadata and ACK coalescing entries, per flow. The list of congestion control reflection metadata and ACK coalescing entries may be stored, for example, by a coalescing engine. The coalescing engine may be on either or both the TX connection endpoint 210 and RX connection endpoint 220. In some examples, the coalescing engine may be the ACK module 225.

The congestion control reflection metadata and ACK coalescing entries for each flow may be updated independently from the other flows. Upon receipt of a packet, the congestion control reflection metadata and ACK coalescing entry for the flow index is accessed. To access the congestion control reflection metadata, the flow relies on the flow index encoded within the flow label. The congestion control reflection metadata is then updated and the flow label in the ACK coalescing entry is overwritten. According to some examples, the ACK coalescing entry may store the flow label of the received packet. By storing the flow label, the flow label can set the correct flow label when the ACK module 255 triggers an ACK packet. The timer/counter may be updated, as needed.

The flow may insert the flow index in the cookie when forwarding the request to ULP. The cookie may mark the flow of a particular packet. By inserting the flow index into the cookie, the acknowledgment from the ULP will include the flow index for the flow. This allows for the ACK coalescing state to be updated based on the ULP acknowledgement.

Referring back to Figure 2, an ACK packet may be generated by an ACK module 255. The ACK packet includes a generated ACK packet, which itself includes the same flow label as the most recently received packet for the flow. In some examples, once the ACK packet is generated, the ACK packet may include at least some of the information, e.g., congestion control reflection metadata, ACK coalescing entries, flow label, or the like, in the ACK header field of the ACK packet. This allows for the congestion control metadata to be attributed to the corresponding flow at the TX connection endpoint 210. The ACK packet may, in some examples, include received and acknowledged bitmaps. The received and acknowledged bitmaps may be used to track multiple packets being sent. For example, each entry in the bitmap may represent a packet. A value of "1" may correspond to a received and/or acknowledged packet and a value of "0" may correspond to a packet that was not received and/or acknowledged. The ACK may additionally include congestion control metadata corresponding to the flow label that the ACK uses.

The ACK module 255 may be triggered to generate the ACK packet after a threshold period of time or after a threshold number of packets have been received. The ACK module 255 may coalesce multiple ACK packets into a single ACK packet for a large number of connections. By doing so, the data transmission performance and speed may be enhanced by reducing a total number of the ACK packets transmitted, thereby reducing overhead for reliable transmission. For example, having multiple flows within the connection may send multiple packets. An ACK is generated for each packet. Rather than sending the multiple ACKs, the ACK module 255 can coalesce the ACKs into a single packet, thereby enhancing performance and speed and reducing overhead by reducing the number of ACK packets transmitted.

When the ACK module 255 triggers an ACK generation, the flow identifies the corresponding flow label based on the flow label stored in the coalescing entry. The generated ACK uses this flow label to extract the flow index and accesses the congestion control reflection metadata at the corresponding flow index. The flow, therefore, is able to populate the congestion control metadata fields for the correct flow label and evict the ACK coalescing entry.

According to some examples, the ACK coalescing entries may be evicted due to reasons other than meeting the ACK coalescing counter/time. For example, the ACK coalescing entries may be evidence due to cache pressure or through other control knobs. When the flow evicts an ACK coalescing entry, the ACK module 255 generates an ACK for the corresponding flow before flushing the coalescing state.

Referring back to Figure 2, in block 250, the ACK packet may be transmitted from the RX connection endpoint 220 to the TX connection endpoint 210. In block 260, the ACK packet may be received by the TX connection endpoint 210. The TX connection endpoint 210 flow may maintain a number of acknowledged packets (num_acked) for each flow.

The number of acknowledged packets may be determined based on the flow index. For example, the RX connection endpoint 220 may insert the flow index in metadata when forwarding the ACK request to the UPL such that, when ACK from the UPL arrives, the metadata contains the flow index for the flow. The flow index is used, in part, to determine the number of acknowledged packets. For example, when an ACK packet arrives at the TX connection endpoint 210, the TX connection endpoint 210 may identify the bitmap associated with the ACK packet. The TX connection endpoint 210 will, in some examples, use the bitmap to determine the number of acknowledged packets. For example, scanning the bitmap, each bit corresponds to a packet within a certain packet sequence number ("PSN"). Using the PSN, the packet context can be accessed such that the flow index can be retrieved, or identified. The number of acknowledged packets, e.g., "num_ack", for that flow index then be incremented based on the retrieved flow index.

The number of acknowledged packets is used to accurately perform additive increase when determining the congestion window, and associated weight, of each flow. Performing additive increase includes, for example, incrementally increasing the congestion window, and associated weight, of each flow. According to some examples, the RUE 270 may use the number of acknowledged packets, in part, to determine the congestion window for each flow. Rather than one RUE event per connection, a RUE event may be outstanding per flow. Each flow may keep a bitmap stored in the headers of the packets, having X number of bits corresponding to the number of data paths, to track outstanding events for each flow. The RUE 270 may include a rate-limiter configured to be per-flow, rather than per connection.

Upon receipt of an ACK packet, a RUE event may be generated. The RUE event may include one or more fields. One field of the RUE event may include an indication that multipath has been enabled for the connection. Another field of the RUE event may include the flow label for which the RUE event is being generated for.

The flow label may be determined and/or identified from the ACK packet. The RUE event may include information pertaining to congestion control for a given flow. The RUE event fields and information allows for the RUE 270 to determine the congestion window for a given flow and, therefore, a weight for each flow. To maintain the statefulness of the RUE 270, a RUE event is generated per flow, rather than per connection. The flow keeps a bitmap to track the outstanding RUE events for each flow. A RUE rate-limiter may be configured to be per flow, rather than per connection.

According to some examples, the RUE event may provide one or more congestion signals. Examples of such congestion signals may include round trip time (RTT), explicit congestion notification (ECN), retransmission status, target buffer occupancy, etc. The RTT may be an accurate measurement of delay, including forward and reverse path delay. The ECN may include markings made by switches in the forward path to indicate congestion being experienced. Retransmission status may identify retransmissions for packets dropped. Such dropped packets may be due to early recovery mechanisms, timeouts, etc.

If a RUE event cannot be generated, the ACK packet may be used to update the number of acknowledged packets, while dropping the other information. A RUE event may not be able to be generated when there is an outstanding, or pending, RUE event for the given flow.

A RUE response may include one or more fields that can be updated. The one or more fields may include the flow label (flow_label), the flow weight (flow_weight), a validity indication (flow_label_valid), and/or a restart field (wrr_restart_round). The flow label and flow weight may be per flow. In examples where the connection scheduling logic 235 is a WRR scheduler, the flow weights may be used by the WRR scheduler among the flows. The RUE 270 may update flow labels at any time through a RUE response. In some examples, the RUE response can update one or more flow labels using the flow_label field. The flow uses the updated flow labels when translated the scheduling logic 235 selected flow index into a flow label. When updating the flow labels, RUE 270 ensures:

$$\text{flow\_label[index]} \ \& \ 0b11 == \text{index}$$

This optimization enables the flow to translate the flow label into an index for accessing per-flow information easily. For each packet, the flow stores the flow index in the packet's content. The flow index is used when determining the number of acknowledge packets per flow. The flow index may, in some examples, be used when selecting the flow label in a case of retransmission.

The validity indication (flow_label_valid) may be per flow label, indicating whether the flow label is valid. The restart field may include an indication as to when to restart the credits in the WRR scheduler. The fields of the RUE response may be updated, for example, to provide an indication to the scheduler to change the weights. In some examples, the indication may be for the scheduler to immediately change the weights.

In some examples, the RUE 270 may report results back to the transport protocol hardware, *e.g.*, RTs 130, 140 of Figure 1, based on which congestion control may be implemented. For example, the RUE results may include signals such as congestion window (Cwnd), retransmission timeout (RTO), etc. Congestion window (Cwnd) may represent a total number of outstanding packets. When RUE updates the congestion window for a flow, the total congestion window the connection may be updated. Updating the congestion window for the connection causes the congestion window for each flow of the connection to be updated. The RUE response may include an updated flow weight for the flows in the connection.

The congestion window may be enforced based on a weighted round robin according to the different congestion windows between flows. For example, there may be 1,000 packets to be sent. A first flow may have a weight of 300, a second flow may have a weight of 200, a third flow may have a weight of 275, and a fourth flow may have a weight of 225. The weight of each flow corresponds to the number of packets of the 1,000 packets to be transmitted via the given flow. The third flow may be identified as a slow flow if the 275 packets are transmitted but only some of the packets are acknowledged. In such an example, using a weighted round robin, once a second batch of packets are received, *e.g.*, another 1,000 packets, the third flow will continue to send 275 packets. The weighted round robin, therefore, enforces the congestion control window between the flows.

In some examples, the congestion window may be enforced per flow. Continuing the example with the four flows and 1,000 packets, if the third flow is slow, the packets from the second batch of packets may be diverted to the other flows, *e.g.,* the first, second, or fourth flow. The number of packets diverted to the other flows may be based on the number of packets the third flow did not receive ACKs from. In some examples, all the packets of the second batch intended for the third flow may be diverted to the other flows.

According to some examples, a given packet has to be retransmitted. When a packet has to be retransmitted, the TX connection endpoint 210 uses the same flow index for the packet as determined for the initial transition. However, if the RUE 270 updated the flow label for the flow index since the initial transmission, the packet to be retransmitted will be updated to correspond to the updated flow label associated with the flow index.

In some examples, to determine whether a packet needs to be retransmitted or if it has been determined that the packet(s) needs to be retransmitted, the packet to be retransmitted needs to belong to the same flow ID, e.g., label, as the received ACK packet. The received ACK packet may be triggering the early retransmission packets.

According to some examples, flow weights may be updated during retransmissions. Retransmissions are not subject to flow label selection by the scheduling logic 235 such that the retransmitted packet will continue to maintain the same flow weight as the initial transmission.

Figure 5 illustrates an example method for when an acknowledgement arrives after the ACK coalescing state for the corresponding flow has been evicted. The acknowledgement may be, for example, a ULP acknowledgement. As an example, a push data packet transmitted from the initiator ULP to the target ULP. As the target transport layer and target ULP receives the push data packet, and while waiting for the target UPL to acknowledge the push transaction, the corresponding ACK coalescing entry, and associated congestion control reflection metadata, for the flow gets evicted 510. This results in the corresponding ACK denoting the received, but not acknowledged, state of the packet being sent.

When the target ULP acknowledges the push transaction, if the ACK requested ("AR") bit is zero, the flow has to update and/or create the ACK coalescing state for the flow. In examples, where the AR-bit is one (1), the flow has to acknowledge the push data packet. However, the corresponding ACK coalescing entry and CC reflection metadata for the flow are not present anymore.

Continuing with this example, when the ACK coalescing entry was evicted 510, the generated ACK carried congestion control reflection metadata for the corresponding flow using the flow label in the Rx packet 240 context. When the target ULP acknowledges 520, the flow notifies of the acknowledged state of the packet sequence number ("PSN").

In examples where the AR-bit is set to 1, the ACK is generated without a flow label, *e.g.*, the ACK does not have to have the flow label of the original push data packet. For example, the target transport layer may not find the ACK coalescing entry and congestion control reflection metadata for the flow index from the flow cookie, *e.g.*, at step 530. In some examples, the flow used by the most recent Rx packet 240 may be used as a "default flow." The generated ACK 540 will use the flow label and carry the CC reflection metadata for the default flow. If the AR-bit is set to 0, the flow creates a new ACK coalescing entry for the flow index, *e.g.*, "A & 0x11." However, as the ACK coalescing entry does not have the flow label for the flow, the ACK coalescing entry will be marked as invalid. The ACK coalescing entry will be marked valid when a new packet arrives on the flow.

When a pull request/data packet with AR-bit set to one (1) arrives, the flow accesses the coalescing entry and congestion control reflection metadata based on the flow label of the incoming packet. The coalescing entry and/or congestion control reflection metadata is updated. For example, updating the coalescing entry and/or congestion control reflection metadata may include updating the coalescing state, writing timestamps, incrementing ECN count, etc. An ACK may be generated with the same flow label and corresponding congestion control reflection metadata.

When a push data packet with AR-bit set to one (1) arrives, the flow accesses the coalescing entry and congestion control reflection metadata based on the flow label of the incoming packet. The coalescing entry and/or congestion control reflection metadata is updated. When the ULP acknowledges the request, the flow extracts the flow index from the cookie. Based on the flow index, the flow accesses the coalescing entry and congestion control reflection metadata to generate an ACK with the appropriate flow label and congestion control reflection metadata. In case the coalescing entries and congestion control reflection metadata have been evicted, the scenario is described above with respect to Figure 5.

When a pull request/data packet and/or a push data with an AR-bit set to zero arrives, the RX flow accesses the coalescing entry and congestion control reflection metadata based on the flow label of the incoming packet. The coalescing entry and/or congestion control reflection metadata is updated. Updating the coalescing entry and/or congestion control reflection metadata includes starting the time, if needed, writing timestamps, increment ECN count, etc.

According to some examples, ACKs may be piggybacked. Piggybacked ACKs may not carry congestion control reflection metadata. Piggybacked ACKs may carry the received and acknowledged bitmaps. Piggybacked ACKs are on normal data/request packets for which the flow labels are decided by the WRR path selection logic.

Example Methods

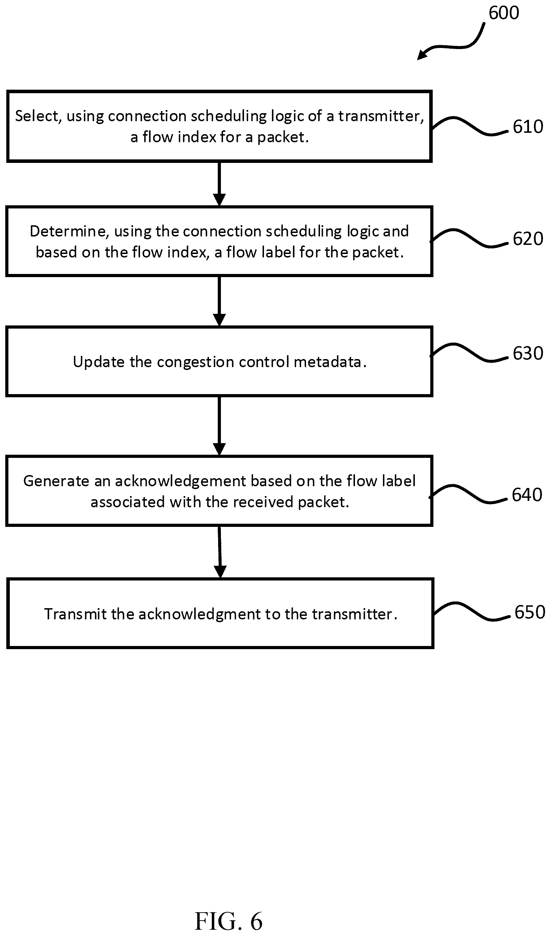

Figure 6 is a flow diagram of an example process 600 for allowing a single connection to transmit and receive packets using multiple flows. The example process can be performed by a network interface card ("NIC") or other network devices, such as the NIC 801 of Figure 8. The following operations do not have to be performed in the precise order described below. Rather, various operations can be handled in a different order or simultaneously, and operations may be added or omitted.

In block 610, a flow index is selected for a packet. The flow index may be selected using connection scheduling logic of a transmitter. The connection scheduling logic may be a weighted round robin scheduler. The weighted round robin scheduler may be configured to maintain a number of available credits for each flow index. The weighted round robin scheduler advances to the next available flow index for each subsequent packet to be transmitted. When the number of available credits reaches zero, the weighted round robin scheduler reloads the number of available credits.

In block 620, a flow label is determined for the packet. For example, the connection scheduling logic of a transmitter determines the flow label for the packet based on the flow index. The flow label indicates a given flow of a plurality of flows within a single connection between the transmitter and receiver.

The packet and its associated flow label is transmitted from the transmitter to the receiver via the flow identified by the flow label. The flow label and/or the flow index is stored in the transmitter context of the packet such that the flow label and/or flow index can be used by the receiver upon receipt.

In block 630, the congestion control metadata is updated by the receiver. The congestion control metadata, e.g., the congestion control reflection metadata, is used to determine a rate at which packets can be sent on each flow of the plurality of flows. When updating the congestion control metadata, the receiver determines the flow index of the packet based on the flow label associated with the packet. The congestion control metadata is then updated at the flow index. The congestion control metadata includes, for example, timestamps, CSIG data, hop count, cumulative ECN count, etc. For example, the receiver maintains a list of congestion control metadata per flow. Once the flow is identified based on the flow label and/or flow index associated with the received packet, the congestion control metadata is updated. In some examples, an ACK coalescing entry corresponding to the flow index is updated in addition to updating the congestion control metadata.

In block 640, an acknowledgement (ACK) is generated by the receiver based on the flow label associated with the received packet. The ACK includes the congestion control metadata. The ACK includes the same flow label as the received packet for the flow. The ACK having the same flow label as the received packet allows for the congestion control metadata to be attributed to the corresponding flow at the transmitter.

In block 650, the receiver transmits the acknowledgement to the transmitter. The transmitter may maintain a counter of the number of packets acknowledged for each flow. The count is used for congestion control to perform additive increase when determining the congestion window and weight of each flow.

According to some examples, a weight for each flow label and a congestion window for a given flow is determined based on the flow label associated with the packet. For example, the flow label may be associated with a weight. The weight may correspond to a level of congestion for the flow associated with the flow label.

While the example method uses flow labels, protocols that do not support flow labels natively may implement the method through other header fields.

Example Computing Environment

Figure 7 is a block diagram of an example network 700 implementing an example NIC according to aspects of the disclosure. The network 700 includes various devices, such as device A, device B, and device C. The devices A, B, and C may be any device capable of communication over the network 700. The devices A, B, and C may be physical devices, virtual devices, or a combination of the two. Examples of physical devices include a microcontroller, a personal computing device, a mobile device, a wearable device, a server. Examples of virtual devices may be virtual devices, for example a virtual machine. To communicate with one another, connections are formed between the entities, such as connection 710 between entities A and B, and connection 720 between entities A and C. The devices may communicate over the connections using one or more protocols. For example, reliable transport is a protocol that notifies the sources whether or not the delivery of data to an intended destination was successful.

A connection may be identified by a pair of connection IDs ("CIDs"), one in each direction of communication. CIDs may be allocated by a receiver device during the connection setup process and have no global significance outside of the parties involved. Thus, the connection 710 between devices A and B may have a CID with value 8 for the direction from A to B, and a CID with value 10 for the direction from B to A. The connection 720 between devices A and C may have a CID value 8 for the direction from A to C and a CID with value 11 for the direction from C to A. Further, CIDs assigned by a device or "Source CIDs" of a device must have different values. In the example shown, the CIDs assigned by device A or Source CIDs of device A have different values 10 and 11. In contrast, "Destination CIDs" of a device are assigned by other devices and may have the same value. Thus, in the example shown, the Destination CIDs of device A are assigned by devices B and C respectively, which may have the same value 8.

Packets may be transmitted over the connections between the source and destination devices. In this regard, a packet is a basic unit of communication across a connection. A packet may have a predetermined size, for example up to a maximum transfer unit ("MTU") in length. A packet may have a header including information about the packet and its transmission, and a payload of data. For reliable transport, a reliable transport packet may include the Destination CID, such as in a header. For example, when device B receives a packet over the connection 710 with the Destination CID of 8, device B may identify the packet as coming from device A and may then notify device A that the packet has been received by sending an acknowledgment over the connection 710 referencing this packet and its CID of 8. The acknowledgment itself may be sent as a packet including the Destination CID of 10.

Figure 8 is a block diagram of an example computing environment 800 for implementing resource isolation, according to aspects of the disclosure. Figure 8 illustrates example resources, e.g., processors, memory, etc., which can be allocated by the NIC for generating connections. Network interface card 801 can be implemented on one or more devices having one or more processors in one or more locations, such as in server computing device 818. User computing device 812 and the server computing device 818 can be communicatively coupled to one or more storage devices 830 over a network 700. For example, devices 818 and 812 may correspond to devices A, B, or C as shown and described with reference to FIGURE 7. The storage device(s) 830 can be a combination of volatile and non-volatile memory and can be at the same or different physical locations than the computing devices 812, 818. For example, the storage device(s) 830 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 818 can include one or more processors 813 and memory 814. The memory 814 can store information accessible by the processor(s) 813, including instructions 821 that can be executed by the processor(s) 813. The memory 814 can also include data 823 that can be retrieved, manipulated, or stored by the processor(s) 813. The memory 814 can be a type of non-transitory computer readable medium capable of storing information accessible by the processor(s) 813, such as volatile and non-volatile memory. The processor(s) 813 can include one or more central processing units (CPUs), graphics processing units (GPUs), field-programmable gate arrays (FPGAs), and/or application-specific integrated circuits (ASICs), such as tensor processing units (TPUs).

The instructions 821 can include one or more instructions that when executed by the processor(s) 813, causes the one or more processors to perform actions defined by the instructions. The instructions 821 can be stored in object code format for direct processing by the processor(s) 813, or in other formats including interpretable scripts or collections of independent source code modules that are interpreted on demand or compiled in advance.

The data 823 can be retrieved, stored, or modified by the processor(s) 813 in accordance with the instructions 821. The data 823 can be stored in computer registers, in a relational or non-relational database as a table having a plurality of different fields and records, or as JSON, YAML, proto, or XML documents. The data 823 can also be formatted in a computer-readable format such as, but not limited to, binary values, ASCII, or Unicode. Moreover, the data 823 can include information sufficient to identify relevant information, such as numbers, descriptive text, proprietary codes, pointers, references to data stored in other memories, including other network locations, or information that is used by a function to calculate relevant data.

Network interface card (NIC) 801 can be configured similar to the server computing device 818, with one or more processors 862 and memory 864, with instructions 868 and data 872. NIC 801 includes input port 878, output port 882, and buffer 876. The NIC 801 can include a connection engine 810 and the rate update engine (RUE) 270. Connection engine 810 can be configured to generate connections and send data from a connection to the wire or other physical component of a network. The connection engine 810 can be used as part of implementing the hardware-assisted transport layer 105. The RUE 270 may be implemented in a combination of software and hardware and may be part of the instructions 868 or implemented as separate components, from example-to-example.

Although buffer 876 and memory 864 are shown as being separate components, the buffer 876 and the memory 864 may be implemented together or separate from one another. The input port 878 may receive data packets from one or more sources, such as another NIC, switch, router, or other such network devices capable of transmitting packets. The output port 882 may transmit data packets to one or more destinations, which may include other network devices capable of receiving packets.

A NIC may operate as both a transmitter and a receiver. Although not shown, the input port 878 and output port 882 may include logic for receiving and sending packets in accordance with instructions received from the the connection engine 810. Moreover, NICs may include more than one input and/or output port.

The buffer 876 may be generally structured as an array of cells configured to hold data packets received from another network device and/or a computing device. The cells may operate as packet buffers from which the data packets in the buffer can be passed to another network device and/or a computing device. For instance, NIC 801 may be attached to a server computing device, such as server computing device 818. Accordingly, the NIC 801 may pass the data packets received from transmitters and stored in the buffer 876 to other components of the server computing device 818, such as processor 813 or memory 814. In another example, NIC 801 may be attached to another NIC. Accordingly, the NIC 801 may pass the data packets received from transmitters and stored in the buffer 876 to other NICs.

The buffer 876 may be constructed from integrated memory within the NIC 801 including any of DRAM, SRAM, etc., stacked memory including memory on one or more separate dies which are stacked onto the memory controller, co-packaged memory including one or more separate dies connected to the memory controller 884 through an interposer or substrate, known as high-bandwidth memory, and/or off-chip memory-such as a DRAM module.

The user computing device 812 can also be configured similar to the server computing device 818, with one or more processors 816, memory 817, instructions 818, and data 819. The user computing device 812 can also include a user output 826, and a user input 824. The user computing device 812 may also include NIC 888 configured similar to the NIC 801. Although described as a user computing device, the device 812 may be any type of computing device, including another server computing device.

The user input 824 can include any appropriate mechanism or technique for receiving input from a user, such as keyboard, mouse, mechanical actuators, soft actuators, touchscreens, microphones, and sensors. The server computing device 818 can be configured to transmit data to the user computing device 812, e.g., using a connection generated by the NIC 801 and/or the NIC 888, and the user computing device 812 can be configured to display at least a portion of the received data on a display implemented as part of the user output 826. The user output 826 can also be used for displaying an interface between the user computing device 812 and the server computing device 818. The user output 826 can alternatively or additionally include one or more speakers, transducers or other audio outputs, a haptic interface or other tactile feedback that provides non-visual and non-audible information to the platform user of the user computing device 812.

Although Figure 8 illustrates the processors 813, 816 and the memories 814, 817 as being within the computing devices 818, 812, components described in this specification, including the processors 813, 816, 862 and the memories 814, 817, 864 can include multiple processors and memories that can operate in different physical locations and not within the same computing device. For example, some of the instructions 821, 818, 868 and the data 823, 819, 872 can be stored on a removable SD card and others within a read-only computer chip. Some or all of the instructions and data can be stored in a location physically remote from, yet still accessible by, the processors 813, 816, 862. Similarly, the processors 813, 816, 862 can include a collection of processors that can perform concurrent and/or sequential operation. The computing devices 818, 812 can each include one or more internal clocks providing timing information, which can be used for time measurement for operations and programs run by the computing devices 818, 812.

The server computing device 818 can be configured to receive requests to process data from the user computing device 812. For example, the environment 800 can be part of a computing platform configured to provide a variety of services to users, through various user interfaces and/or APIs exposing the platform services. One or more services can be a machine learning framework or a set of tools for generating neural networks or other machine learning models according to a specified task and training data.

Datacenter 880 can be in communication one or both of the server computing device 818 and the user computing device 812. The datacenter 880 can include a number of computing devices, such as hardware accelerators A-N. The hardware accelerators A-N and/or other devices can be used to perform services offered by the computing platform or the environment 800. In some examples, one or both of the devices 818, 812, are physically housed in the datacenter 880. The datacenter 880 can be implemented in one or more locations with one or more devices which are configured to communicate data using one or more NICs as described herein.

The devices 812, 818, and datacenter 880 can be capable of direct and indirect communication over the network 700. The devices 818, 812, as well as devices of the datacenter 880, can set up listening sockets that may accept an initiating connection for sending and receiving information. The network 700 itself can include various configurations and protocols including the Internet, World Wide Web, intranets, virtual private networks, wide area networks, local networks, and private networks using communication protocols proprietary to one or more companies. The network 700 can support a variety of short- and long-range connections. The short- and long-range connections may be made over different bandwidths, such as 2.402 GHz to 2.480 GHz (commonly associated with the Bluetooth® standard), 2.4 GHz and 5 GHz (commonly associated with the Wi-Fi® communication protocol); or with a variety of communication standards, such as the LTE® standard for wireless broadband communication. The network 700, in addition or alternatively, can also support wired connections between the devices 812, 818, and devices of the datacenter 880, including over various types of Ethernet connection.

Although a single server computing device 818, user computing device 812, and datacenter 880 are shown in Figure 8, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed software, firmware, hardware, or a combination thereof that cause the system to perform the operations or actions. For one or more computer programs to be configured to perform operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC), such as a Tensor Processing Unit (TPU). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" can refer to a software-based system, subsystem, or process that is programmed to perform one or more specific functions. The engine can be implemented as one or more software modules or components or can be installed on one or more devices in one or more locations. A particular engine can have one or more devices dedicated thereto, or multiple devices can be installed and running on the same device or device. In some examples, an engine can refer to a hardware-based system, subsystem, or process at least partially implemented as one or more appropriately configured to perform one or more specific functions.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a front-end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method, comprising:

   determining, using connection scheduling logic and based on a flow index selected using the connection scheduling logic of a transmitter, a flow label for a packet, wherein the flow label indicates a given flow of a plurality of flows within a single connection between the transmitter and a receiver;
   updating, by the receiver, congestion control metadata for a received packet, wherein the congestion control metadata is used to determine a rate at which packets can be sent on each flow of the plurality of flows;
   generating, by the receiver, an acknowledgement based on the flow label associated with the received packet, wherein the acknowledgement comprises the updated congestion control metadata; and
   transmitting, by the receiver, the acknowledgement to the transmitter.

2. The method of claim 1, wherein the connection scheduling logic is a weighted round robin.

3. The method of claim 2, wherein the weighted round robin is configured to:

maintain a number of available credits for each flow index;
advance to a next flow index for each subsequent packet; and
reload the number of available credits when the number of available credits reaches zero.

4. The method of one of claims 1 to 3, further comprising storing, by the receiver, the flow index in a transmitter context of the packet.

5. The method of one of claims 1 to 4, wherein when updating the congestion control metadata, the method further comprises:

identifying, based on the flow label of the received packet, the flow index associated with the congestion control metadata; and
updating the congestion control metadata at the flow index.

6. The method of one of claims 1 to 5, further comprising determining, based on the flow label associated with the packet, a weight for each flow label and a congestion window for a given flow of the plurality of flows.

7. The method of one of claims 1 to 6, wherein the flow label is associated with a weight corresponding to a level of congestion for the flow; and/or

wherein the flow label corresponds to the flow index; and/or
wherein the congestion control metadata includes at least one of timestamps, CSIG data, hop count, or cumulative ECN count.

8. A system for transmitting packets via a plurality of flows within a connection, the system comprising:

the connection between a transmitter and a receiver, the connection comprising the plurality of flows for the packets to traverse between the transmitter and the receiver;
the transmitter configured to transmit a packet and a flow label associated with the packet to the receiver;
the receiver configured to:

receive the packet via a given flow;
update congestion control metadata, wherein the congestion control metadata is used to determine a rate at which packets can be sent on each flow of the plurality of flows; and
generate an acknowledgement based on the flow label associated with the packet, wherein the acknowledgement comprises the updated congestion control metadata; and
transmit the acknowledgement to the transmitter.

9. The system of claim 8, wherein the transmitter is configured to determine the flow label using connection scheduling logic comprising:

selecting a flow index for the packet; and
identifying, based on the selected flow index, the flow label for the packet.

10. The system of claim 8 or claim 9, wherein the transmitter is configured to select a flow index and identify the flow label using a weighted round robin scheduler.

11. The system of claim 10, wherein the weighted round robin scheduler is configured to:

maintain a number of available credits for each flow index;
advance to a next flow index for each subsequent packet; and
reload the number of available credits when the number of available credits reaches zero.

12. The system of one of claims 8 to 11, wherein the flow label corresponds to a flow index.

13. The system of claim 12, wherein the transmitter stores the flow index in a transmitter context of the packet; and/or
wherein updating the congestion control metadata comprises:

determining, based on the flow label of the received packet, the flow index; and
updating the congestion control metadata at the flow index.

14. The system of one of claims 8 to 13, wherein the congestion control metadata includes at least one of timestamps, CSIG data, hop count, or cumulative ECN count; and/or

further comprising one or more processors, wherein the one or more processors are configured to:
determine, based on the flow label associated with the packet, a weight for each flow label and a congestion window for the connection in a given data path of the plurality of flows; and/or wherein the flow label is associated with a weight corresponding to a level of congestion for the flow.

15. One or more non-transitory computer-readable storage media storing instructions that when executed by a network device comprising one or more processors, cause the one or more processors to perform operations comprising:

selecting, using connection scheduling logic of a transmitter, a flow index for a packet;

determining, using connection scheduling logic and based on a flow index selected using the connection scheduling logic of a transmitter, a flow label for the packet, wherein the flow label indicates a given flow of a plurality of flows within a single connection between the transmitter and a receiver;

updating, by the receiver, congestion control metadata, wherein the congestion control metadata is used to determine a rate at which packets can be sent on each data path of the plurality of data paths;

generating, by the receiver, an acknowledgement based on the flow label associated with the received packet, wherein the acknowledgement comprises the updated congestion control metadata; and

transmitting, by the receiver, the acknowledgement to the transmitter.

**FIG. 1**

100

Entity A

ULP 110
- ULP Instance 115

Transactional Layer 132
Packet Delivery Layer 134

Connection 135

Entity B

ULP 120
- ULP Instance 125

Transactional Layer 142
Packet Delivery Layer 144

Connection 145

140

130

150

FIG. 2

| Flow Index | 00 | 01 | 10 | 11 |
|---|---|---|---|---|
| Flow Credit | $c0$ | $c1$ | $c2$ | $c3$ |

| Flow Label | label_0 | label_1 | label_2 | label_3 |
|---|---|---|---|---|
| Flow Weight | weight_0 | weight_1 | weight_2 | weight_3 |

FIG. 3

| CC Metadata | #0 | #1 | #2 | #3 |
|---|---|---|---|---|
| ACK Coalescing Entries | #0 | #1 | #2 | #2 |

flow_label[index] & 0b11 = index

FIG. 4

Initiator ULP | Initiator Transport Layer | Target Transport Layer | Target ULP

Push Request N

Push Data N
Flow label = A
AR = 1

Push Request N

Flow index = A & 0x11 in cookie

ACK
Flow label = A
(Push Request N: received, not acknowledged)

510

Target ULP
slow in
acknowledging

520

530

Flow index = A & 0x11 in cookie

540

ACK
Flow label = default
(Push Request N: received, acknowledged)

FIG. 5

EP 4 654 549 A1

600

```
┌─────────────────────────────────────────────────┐
│  Select, using connection scheduling logic of a  │      610
│  transmitter, a flow index for a packet.         │
└─────────────────────────────────────────────────┘
                        │
                        ▼
┌─────────────────────────────────────────────────┐
│  Determine, using the connection scheduling      │      620
│  logic and based on the flow index, a flow       │
│  label for the packet.                           │
└─────────────────────────────────────────────────┘
                        │
                        ▼
┌─────────────────────────────────────────────────┐
│  Update the congestion control metadata.         │      630
└─────────────────────────────────────────────────┘
                        │
                        ▼
┌─────────────────────────────────────────────────┐
│  Generate an acknowledgement based on the flow   │      640
│  label associated with the received packet.      │
└─────────────────────────────────────────────────┘
                        │
                        ▼
┌─────────────────────────────────────────────────┐
│  Transmit the acknowledgment to the transmitter. │      650
└─────────────────────────────────────────────────┘
```

FIG. 6

FIG. 7

**800**

Server Computing Device 818

Processor 813

Memory 814
- Instructions 821
- Data 823

Processor 862

Memory 864
- RUE 270
- Instructions 868
- Data 872
- Connection Engine 810

Buffer 876

Input Port 878

Output Port 882

Network Interface Card 801

830

User Computing Device 812

Processor 816

Memory 817
- Instructions 818
- Data 819

User Input 824

User Output 826

Network Interface Card 888

700

Datacenter 880

Hardware Accelerator A

. . .

Hardware Accelerator N

FIG. 8

Europäisches Patentamt
European Patent Office
Office européen des brevets

# EUROPEAN SEARCH REPORT

**Application Number**

EP 25 16 8629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 777 843 B2 (HEWLETT PACKARD ENTPR DEV LP [US]) 3 October 2023 (2023-10-03) | 1,4-9, 12-15 | INV. H04L45/24 |
| Y | * figure 3b * <br> * column 10, line 38 - line 67 * <br> * column 16, line 21 - line 36 * | 2,3,10, 11 | H04L47/27 H04L47/62 |
| Y | DO V L ET AL: "An efficient frame-based scheduling algorithm: credit round robin", HIGH PERFORMANCE SWITCHING AND ROUTING, 2003, HPSR. WORKSHOP ON JUNE 24-27, 2003, PISCATAWAY, NJ, USA,IEEE, 24 June 2003 (2003-06-24), pages 103-110, XP010654652, ISBN: 978-0-7803-7710-3 * figure 1 * | 2,3,10, 11 | ADD. H04L47/10 |

**TECHNICAL FIELDS SEARCHED (IPC)**

H04L

The present search report has been drawn up for all claims

| Place of search | Date of completion of the search | Examiner |
|---|---|---|
| The Hague | 21 August 2025 | Tsuchiya, Kuni |

## ANNEX TO THE EUROPEAN SEARCH REPORT
## ON EUROPEAN PATENT APPLICATION NO.

EP 25 16 8629

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2025

| Patent document cited in search report | | Publication date | Patent family member(s) | | Publication date |
|---|---|---|---|---|---|
| US 11777843 | B2 | 03-10-2023 | CN | 113692581 A | 23-11-2021 |
| | | | CN | 113692725 A | 23-11-2021 |
| | | | CN | 113711173 A | 26-11-2021 |
| | | | CN | 113711547 A | 26-11-2021 |
| | | | CN | 113711548 A | 26-11-2021 |
| | | | CN | 113711549 A | 26-11-2021 |
| | | | CN | 113711550 A | 26-11-2021 |
| | | | CN | 113711551 A | 26-11-2021 |
| | | | CN | 113728315 A | 30-11-2021 |
| | | | CN | 113728592 A | 30-11-2021 |
| | | | CN | 113728593 A | 30-11-2021 |
| | | | CN | 113728594 A | 30-11-2021 |
| | | | CN | 113728595 A | 30-11-2021 |
| | | | CN | 113728596 A | 30-11-2021 |
| | | | CN | 113728597 A | 30-11-2021 |
| | | | CN | 113728598 A | 30-11-2021 |
| | | | CN | 113728599 A | 30-11-2021 |
| | | | CN | 113748647 A | 03-12-2021 |
| | | | CN | 113748648 A | 03-12-2021 |
| | | | CN | 113748652 A | 03-12-2021 |
| | | | CN | 113767598 A | 07-12-2021 |
| | | | CN | 113767599 A | 07-12-2021 |
| | | | CN | 113767600 A | 07-12-2021 |
| | | | CN | 113767601 A | 07-12-2021 |
| | | | CN | 113785536 A | 10-12-2021 |
| | | | CN | 113785541 A | 10-12-2021 |
| | | | CN | 113785543 A | 10-12-2021 |
| | | | CN | 113874848 A | 31-12-2021 |
| | | | CN | 114073054 A | 18-02-2022 |
| | | | CN | 119697117 A | 25-03-2025 |
| | | | DE 112020002481 T5 | 28-04-2022 |
| | | | DE 112020002484 T5 | 28-04-2022 |
| | | | DE 112020002490 T5 | 28-04-2022 |
| | | | DE 112020002491 T5 | 28-04-2022 |
| | | | DE 112020002493 T5 | 28-04-2022 |
| | | | DE 112020002494 T5 | 28-04-2022 |
| | | | DE 112020002495 T5 | 28-04-2022 |
| | | | DE 112020002496 T5 | 28-04-2022 |
| | | | DE 112020002497 T5 | 28-04-2022 |
| | | | DE 112020002498 T5 | 28-04-2022 |
| | | | DE 112020002499 T5 | 25-08-2022 |
| | | | DE 112020002500 T5 | 14-04-2022 |
| | | | DE 112020002501 T5 | 11-08-2022 |
| | | | DE 112020002509 T5 | 03-03-2022 |
| | | | DE 112020002510 T5 | 10-03-2022 |
| | | | DE 112020002512 T5 | 17-02-2022 |

EPO FORM P0459

For more details about this annex : see Official Journal of the European Patent Office, No. 12/82

page 1 of 4

## ANNEX TO THE EUROPEAN SEARCH REPORT
## ON EUROPEAN PATENT APPLICATION NO.

EP 25 16 8629

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2025

| Patent document cited in search report | Publication date | Patent family member(s) | Publication date |
|---|---|---|---|
| | | DE 112020002528 T5 | 24-03-2022 |
| | | DE 112020002754 T5 | 31-03-2022 |
| | | EP 3942398 A1 | 26-01-2022 |
| | | EP 3942422 A1 | 26-01-2022 |
| | | EP 3942747 A1 | 26-01-2022 |
| | | EP 3942749 A2 | 26-01-2022 |
| | | EP 3942754 A1 | 26-01-2022 |
| | | EP 3942755 A1 | 26-01-2022 |
| | | EP 3942757 A1 | 26-01-2022 |
| | | EP 3942758 A1 | 26-01-2022 |
| | | EP 3942759 A1 | 26-01-2022 |
| | | EP 3942763 A1 | 26-01-2022 |
| | | EP 3949290 A1 | 09-02-2022 |
| | | US 2022166705 A1 | 26-05-2022 |
| | | US 2022182309 A1 | 09-06-2022 |
| | | US 2022191127 A1 | 16-06-2022 |
| | | US 2022191128 A1 | 16-06-2022 |
| | | US 2022197831 A1 | 23-06-2022 |
| | | US 2022197838 A1 | 23-06-2022 |
| | | US 2022197845 A1 | 23-06-2022 |
| | | US 2022200897 A1 | 23-06-2022 |
| | | US 2022200900 A1 | 23-06-2022 |
| | | US 2022200912 A1 | 23-06-2022 |
| | | US 2022200913 A1 | 23-06-2022 |
| | | US 2022200923 A1 | 23-06-2022 |
| | | US 2022206956 A1 | 30-06-2022 |
| | | US 2022210054 A1 | 30-06-2022 |
| | | US 2022210055 A1 | 30-06-2022 |
| | | US 2022210058 A1 | 30-06-2022 |
| | | US 2022210081 A1 | 30-06-2022 |
| | | US 2022210092 A1 | 30-06-2022 |
| | | US 2022210094 A1 | 30-06-2022 |
| | | US 2022214919 A1 | 07-07-2022 |
| | | US 2022214934 A1 | 07-07-2022 |
| | | US 2022214975 A1 | 07-07-2022 |
| | | US 2022217073 A1 | 07-07-2022 |
| | | US 2022217076 A1 | 07-07-2022 |
| | | US 2022217078 A1 | 07-07-2022 |
| | | US 2022217079 A1 | 07-07-2022 |
| | | US 2022217090 A1 | 07-07-2022 |
| | | US 2022217094 A1 | 07-07-2022 |
| | | US 2022217096 A1 | 07-07-2022 |
| | | US 2022224628 A1 | 14-07-2022 |
| | | US 2022224639 A1 | 14-07-2022 |
| | | US 2022229800 A1 | 21-07-2022 |
| | | US 2022231962 A1 | 21-07-2022 |

EPO FORM P0459

For more details about this annex : see Official Journal of the European Patent Office, No. 12/82

page 2 of 4

## ANNEX TO THE EUROPEAN SEARCH REPORT
## ON EUROPEAN PATENT APPLICATION NO.

EP 25 16 8629

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2025

| Patent document cited in search report | Publication date | Patent family member(s) | | Publication date |
|---|---|---|---|---|
| | | US | 2022231965 A1 | 21-07-2022 |
| | | US | 2022232111 A1 | 21-07-2022 |
| | | US | 2022239587 A1 | 28-07-2022 |
| | | US | 2022245072 A1 | 04-08-2022 |
| | | US | 2022255884 A1 | 11-08-2022 |
| | | US | 2022311544 A1 | 29-09-2022 |
| | | US | 2022329521 A1 | 13-10-2022 |
| | | US | 2022353199 A1 | 03-11-2022 |
| | | US | 2023046350 A1 | 16-02-2023 |
| | | US | 2023370364 A1 | 16-11-2023 |
| | | US | 2023396533 A1 | 07-12-2023 |
| | | US | 2023403229 A1 | 14-12-2023 |
| | | US | 2024039836 A1 | 01-02-2024 |
| | | US | 2024106736 A1 | 28-03-2024 |
| | | US | 2024113961 A1 | 04-04-2024 |
| | | US | 2024121179 A1 | 11-04-2024 |
| | | US | 2024121180 A1 | 11-04-2024 |
| | | US | 2024121181 A1 | 11-04-2024 |
| | | US | 2024121182 A1 | 11-04-2024 |
| | | US | 2024160584 A1 | 16-05-2024 |
| | | US | 2024171506 A1 | 23-05-2024 |
| | | US | 2024171507 A1 | 23-05-2024 |
| | | US | 2024250898 A1 | 25-07-2024 |
| | | US | 2024259301 A1 | 01-08-2024 |
| | | US | 2024259302 A1 | 01-08-2024 |
| | | US | 2024291750 A1 | 29-08-2024 |
| | | US | 2024314063 A1 | 19-09-2024 |
| | | US | 2024323113 A1 | 26-09-2024 |
| | | US | 2024323114 A1 | 26-09-2024 |
| | | US | 2024348538 A1 | 17-10-2024 |
| | | US | 2024348539 A1 | 17-10-2024 |
| | | US | 2024356836 A1 | 24-10-2024 |
| | | US | 2025030627 A1 | 23-01-2025 |
| | | US | 2025126055 A1 | 17-04-2025 |
| | | US | 2025126056 A1 | 17-04-2025 |
| | | US | 2025193110 A1 | 12-06-2025 |
| | | US | 2025202804 A1 | 19-06-2025 |
| | | WO | 2020236258 A1 | 26-11-2020 |
| | | WO | 2020236259 A1 | 26-11-2020 |
| | | WO | 2020236261 A1 | 26-11-2020 |
| | | WO | 2020236262 A2 | 26-11-2020 |
| | | WO | 2020236264 A1 | 26-11-2020 |
| | | WO | 2020236265 A1 | 26-11-2020 |
| | | WO | 2020236266 A1 | 26-11-2020 |
| | | WO | 2020236267 A1 | 26-11-2020 |
| | | WO | 2020236268 A1 | 26-11-2020 |

EPO FORM P0459

For more details about this annex : see Official Journal of the European Patent Office, No. 12/82

page 3 of 4

## ANNEX TO THE EUROPEAN SEARCH REPORT
## ON EUROPEAN PATENT APPLICATION NO.

EP 25 16 8629

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2025

| Patent document cited in search report | Publication date | Patent family member(s) | Publication date |
|---|---|---|---|
| | | WO 2020236269 A1 | 26-11-2020 |
| | | WO 2020236270 A1 | 26-11-2020 |
| | | WO 2020236271 A1 | 26-11-2020 |
| | | WO 2020236272 A1 | 26-11-2020 |
| | | WO 2020236273 A1 | 26-11-2020 |
| | | WO 2020236274 A1 | 26-11-2020 |
| | | WO 2020236275 A1 | 26-11-2020 |
| | | WO 2020236276 A1 | 26-11-2020 |
| | | WO 2020236277 A1 | 26-11-2020 |
| | | WO 2020236278 A1 | 26-11-2020 |
| | | WO 2020236279 A1 | 26-11-2020 |
| | | WO 2020236280 A1 | 26-11-2020 |
| | | WO 2020236281 A1 | 26-11-2020 |
| | | WO 2020236282 A1 | 26-11-2020 |
| | | WO 2020236283 A1 | 26-11-2020 |
| | | WO 2020236284 A1 | 26-11-2020 |
| | | WO 2020236285 A1 | 26-11-2020 |
| | | WO 2020236286 A1 | 26-11-2020 |
| | | WO 2020236287 A1 | 26-11-2020 |
| | | WO 2020236288 A1 | 26-11-2020 |
| | | WO 2020236289 A1 | 26-11-2020 |
| | | WO 2020236290 A1 | 26-11-2020 |
| | | WO 2020236291 A1 | 26-11-2020 |
| | | WO 2020236292 A1 | 26-11-2020 |
| | | WO 2020236293 A1 | 26-11-2020 |
| | | WO 2020236294 A1 | 26-11-2020 |
| | | WO 2020236295 A1 | 26-11-2020 |
| | | WO 2020236296 A1 | 26-11-2020 |
| | | WO 2020236297 A1 | 26-11-2020 |
| | | WO 2020236298 A1 | 26-11-2020 |
| | | WO 2020236299 A1 | 26-11-2020 |
| | | WO 2020236300 A1 | 26-11-2020 |
| | | WO 2020236301 A1 | 26-11-2020 |
| | | WO 2020236302 A1 | 26-11-2020 |

EPO FORM P0459

For more details about this annex : see Official Journal of the European Patent Office, No. 12/82

page 4 of 4